# EUROPEAN PATENT APPLICATION

(11) **EP 3 240 295 A1**
(43) Date of publication of application: **01.11.2017**
(21) Application number: 16167550.9
(22) Date of filing: 28.04.2016
(51) Int. Cl.: H04N 21/482, H04N 21/45, H04N 21/466

(54) **GRID-TYPE CONTENT PRESENTATION DEVICE AND METHOD**

(71) Applicant: Advanced Digital Broadcast S.A., 1292 Chambesy (CH)
(72) Inventor: Wielgosz, Marcin, 65-119 Zielona Gora (PL)
(74) Representative: Kancelaria Eupatent.pl Sp. z.o.o

(57) **Abstract**

A computer-implemented method for presenting content items to a user of a device having a network interface and a controller configured to generate a graphical user interface, the method comprising performing the following steps within the device: receiving (1102), from a data provider (170) accessible over the network (190), content description data for a plurality of content items; receiving (1103), from a recommendation server (130) accessible over the network (190), recommendation data for the plurality of content items; selecting (1104) the content items that meet predefined recommendation criteria to be presented as recommended content items; and presenting (1105) the recommended content items in the form of an electronic program guide (EPG) grid within the graphical user interface to allow the user to navigate and select the content item of interest; characterized in that the EPG grid has a form of a minimized grid that comprises at least one minimized group (910-970) of cells (611, 621, 631), wherein the cells in the minimized group (910-970) are arranged as a matrix having at least one column and a plurality of rows, wherein each cell (611, 621, 631) is assigned to a particular content item depending on the recommendation score for that content item and has a size that is independent of the length of the content item.

## Description

### TECHNICAL FIELD

The present disclosure relates to presentation and management of recommended content items, in particular to presentation of content items for devices with limited screen size and computing resources.

### BACKGROUND

With the development of modern audio/video technologies, people can instantly access large amount of content at any given time from various sources. This requires a tool that can help the users to rapidly find a content item in which a user can be interested, i.e. a personalized content recommendation system. At present, various kinds of content recommendation systems have already been applied to television, broadcast and Internet fields extensively. The design of content recommendation systems is focused on providing a best match between the available content and user needs, and the currently known systems are quite effective for this task. However, there is still a need to improve the way in which recommended content is presented to the user, in case the amount of recommended content is high and requires further manual selection by the user.

A well known method of presenting available content is a grid-type electronic programme guide (EPG) or interactive program guide (IPG), which typically has a timeline along its X axis and lists available channels on a Y axis, wherein programmes available at a particular channel at a particular time are presented in cells within the grid. It is well-known to mark recommended content in the EPG grid for example by highlighting the cells with the recommended content. However, this approach requires the user to scroll through the whole grid, which may be quite time-consuming.

Therefore, there is a need to improve the way in which recommended content from a plurality of sources is presented to the user, in order to achieve at least one of the effects of: reduction of the time and/or number of actions to be performed by the user to browse the recommended content or to access a particular recommended content item, improvement of usability of the program guide (such as EPG or IPG), efficient use of hardware and/or software resources of a device that presents the recommended content to the user.

### SUMMARY

The present disclosure relates to a computer-implemented method for presenting content items to a user of a device having a network interface and a controller configured to generate a graphical user interface, the method comprising performing the following steps within the device: receiving, from a data provider accessible over the network, content description data for a plurality of content items; receiving, from a recommendation server accessible over the network, recommendation data for the plurality of content items; selecting the content items that meet predefined recommendation criteria to be presented as recommended content items; presenting the recommended content items in the form of an electronic program guide grid within the graphical user interface to allow the user to navigate and select the content item of interest; characterized in that the EPG grid has a form of a minimized grid that comprises at least one minimized group of cells, wherein the cells in the minimized group are arranged as a matrix having at least one column and a plurality of rows, wherein each cell is assigned to a particular content item depending on the recommendation score for that content item and has a size that is independent of the length of the content item.

There is also disclosed a non-transitory computer readable storage medium comprising instructions that, when executed by a computer, enable a graphical user interface to be displayed, wherein the graphical user interface is configured to display information related to recommended content items in the form of an electronic program guide grid to allow the user to navigate and select the content item of interest, characterized in that: the recommended content items are selected from a plurality of content items having associated recommendation data that meet predefined recommendation criteria; the EPG grid has a form of a minimized grid that comprises at least one minimized group of cells, wherein the cells in the minimized group are arranged as a matrix having at least one column and a plurality of rows, wherein each cell is assigned to a particular content item depending on the recommendation score for that content item and has a size that is independent of the length of the content item.

There is also disclosed a device comprising: a network interface configured to allow communication with external services over a network; a controller configured to generate a graphical user interface; a recommendation manager configured to: receive, from a data provider accessible over the network, content description data for a plurality of content items; receive, from a recommendation server accessible over the network, recommendation data for the plurality of content items; and select the content items that meet predefined recommendation criteria to be presented as recommended content items; and an EPG presentation unit configured to present the recommended content items in the form of an electronic program guide grid within the graphical user interface to allow the user to navigate and select the content item of interest; characterized in that the EPG grid has a form of a minimized grid that comprises at least one minimized group of cells, wherein the cells in the minimized group are arranged as a matrix having at least one column and a plurality of rows, wherein each cell is assigned to a particular content item depending on the recommendation score for that content item and has a size that is independent of the length of the content item.

Preferably, the cells of at least one of the groups are assigned to content items of a different category than the category of the content items to which there are assigned the cells of at least one of the other groups.

Preferably, the cells of at least one of the groups are assigned to content items of different categories.

Preferably, the category of a content item is one of: a catch-up, a live broadcast, a recording, a Video on Demand, a forthcoming television

Preferably, the size of all cells within the group is the same.

Preferably, the size of the cells of at least one of the groups is different than the size of the cells of at least one of the other groups.

Preferably, the cells of at least one of the groups are assigned to television programming available from a plurality of television channels, and wherein each row comprises recommended content items available from a particular television channel sorted according to the broadcast time.

Preferably, the cells of at least one of the groups are assigned to content items sorted according to at least one criteria selected from the group comprising: recording time, recording length, already viewed time, source, recommendation score, genre, title.

Preferably, the cells of at least one of the groups comprise at least one content description data selected from the group comprising: a background image, a background video, content title, content description.

Preferably, at least one of the groups comprises a cell assigned to an advertising content.

Preferably, at least one of the groups is scrollable along a horizontal and/or vertical axis.

Preferably, the minimized grid has a size larger than the size of the display screen connected to the device and is scrollable along a horizontal and/or vertical axis.

Preferably, the method further comprises monitoring an activity of the device and sending data descriptive of the activity to a monitoring server.

### BRIEF DESCRIPTION OF DRAWINGS

The disclosure is accompanied by the drawing, wherein:
Fig. 1 presents an overview of a general content distribution system.
Fig. 2 presents an overview of a content distribution system at a user premises.
Fig. 3 presents a block diagram of a mobile device at which the content presentation system can be implemented.
Fig. 4 presents a block diagram of a set top box device at which the content presentation system can be implemented.
Figs. 5A-5D present data stored in user device memory.
Figs. 6A-6C present examples of content display schemes for various groups of content of particular type to be displayed in a minimized grid.
Figs. 7A-7C present examples of content information elements.
Figs. 8A, 8B present examples of a timeline-based graphical user interface which is partially visible on a screen of a small mobile device.
Figs. 9A-9C present embodiments of a minimized grid.
Figs. 10A-10B present a graphical user interface for a full typical grid.
Fig. 11 presents in general a method for presenting recommendations to the user.
Figs. 12A-12B present in details a method for presenting recommendations to the user.
Figs. 13A-13B present methods for generating a minimized grid and a normal grid layout.
Fig. 14 presents a method for monitoring user activity.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

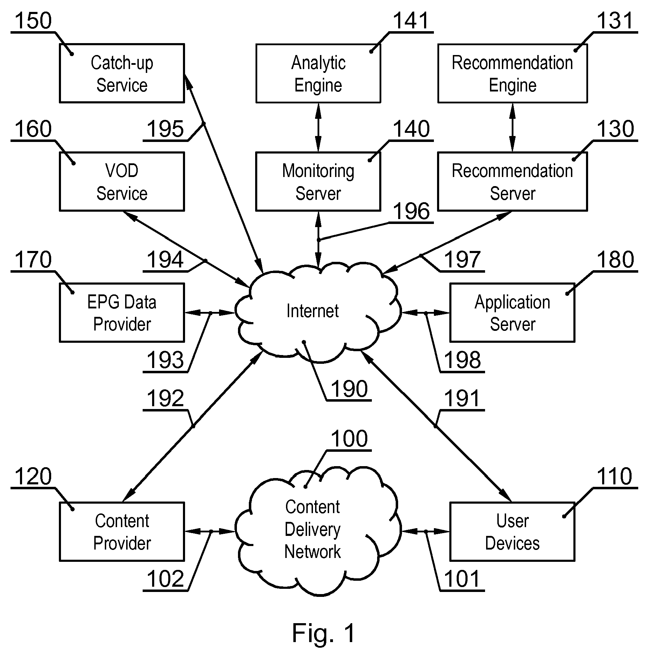

Fig. 1 presents an overview of a general content distribution system. Content can be provided to user devices 110 by various distributors from various sources. A content provider 120 may provide linear TV content, such as time-and-channel based television, live broadcasts etc, to a content delivery network 100, which may be broadcast, multicast or unicast. The user is connected with the content delivery network via a transmission channel 101, such as a QAM, Satellite, Terrestrial, IP multicast network or other type of network. Additional services are available to the user devices 110 linked via a transmission channel 191 with the Internet 190 (or through the content provider 120 connected via a transmission channel 192 with the Internet and via a transmission channel 102 with the content delivery network 110) and include at least some of the following.

A monitoring server 140 is configured to provide, via a transmission channel 196, statistics about the activity of a particular user or a particular user device. The statistics are generated by an analytic engine 141 that operates any of the known methods to analyze user activity and draw appropriate conclusions.

A recommendation server 130 is configured to provide, via a transmission channel 197, data about content recommended for a particular user or a particular user device, based on the statistics provided by the monitoring server 140. The data are generated by a recommendation engine 131 that operates any of the known methods for matching content with the user profile. The recommendations are used to organize the presentation of content at the user device accordingly.

An application server 180 is configured to provide, via a transmission channel 198, various types of software applications, including the application to present content accordingly to the recommendations provided by the recommendation server 140, to be executed at the user devices 110.

A catch-up service 150 is configured to provide, via a transmission channel 195, retransmission the content that has been already broadcast as linear TV, in order to allow the users to watch it a few hours or even days later.

A Video on Demand (VOD) service 160 is configured to provide, via a transmission channel 194, pre-recorded content on request.

An Electronic Program Guide (EPG) data provider is configured to provide, via a transmission channel 193, additional data about content available from various sources, including the content available from the content delivery network 100 and the other content providers 150, 160.

The transmission channels 191-197 may be of any known type, such as wired or wireless, using transmission technologies suitable to carry data of a particular service.

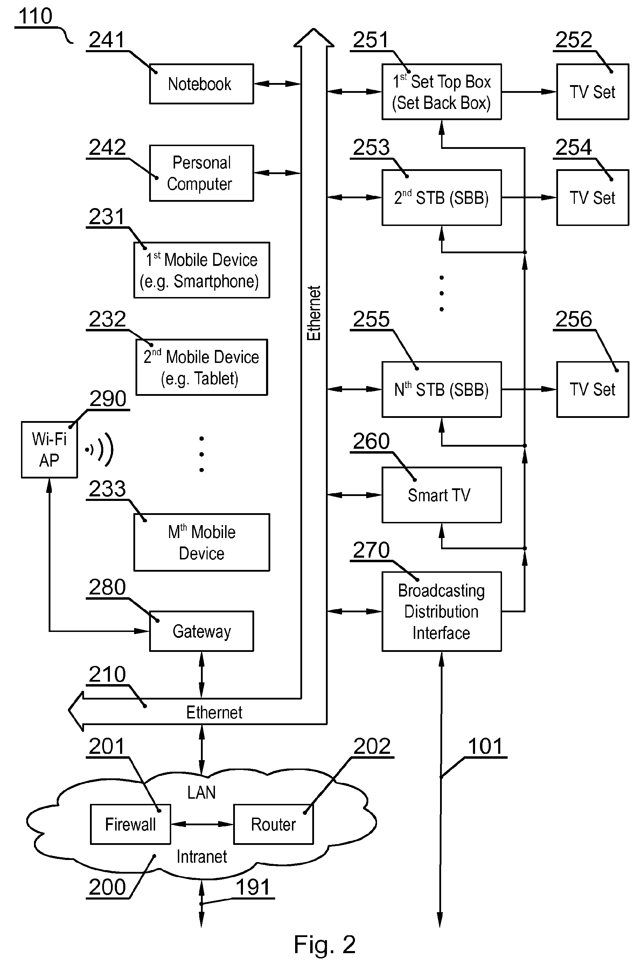

Fig. 2 presents an overview of a content distribution system at a user premises, such as at home or at an office. The user devices are connected to an Intranet - a local area network (LAN) 200 via an interface such as Ethernet (IP) 210, which is connected with the Internet 190 via the transmission channel 191. The LAN 200 preferably includes a firewall 201 and a router 202 configured to secure and coordinate data transmission. A gateway 280 may provide access to the Intranet 200 via a wireless access point (AP) 290, such as in Wi-Fi technology. A plurality of devices may be used in the user premises. Some of the devices may be mobile devices, such as a smartphone 231, a tablet 232 or another type of device 233. Other devices may be mobile or stationary and include devices such as a notebook computer 241, a personal computer 242, a Set Top Box (STB) or a Set Back Box (SBB) 251, 253, 255 connected to a television set 252, 254, 256, or a smart television set 260. A broadcasting distribution interface 270 may receive content from the content delivery network 100 via the transmission channel 101 and distribute it to the other devices via direct links or via the Ethernet interface.

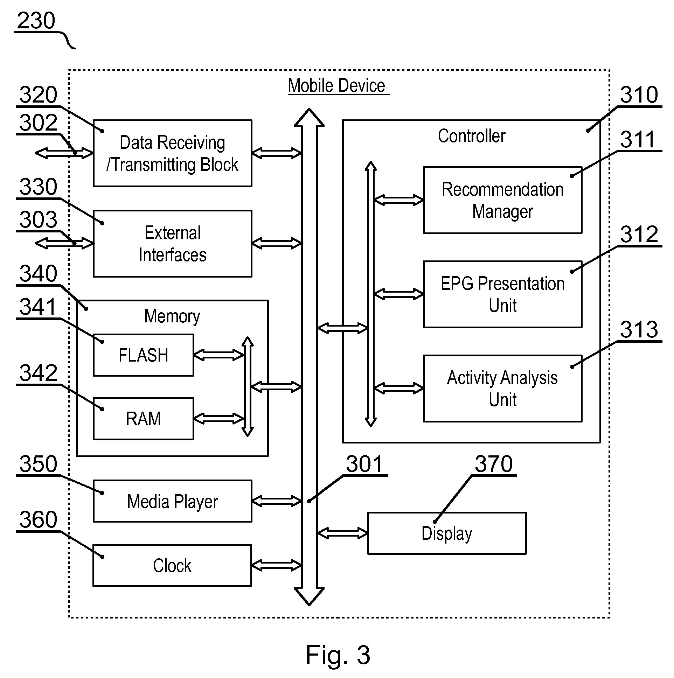

Fig. 3 presents a block diagram of a device 230, such as a tablet or smartphone, or a smart television, a notebook or a personal computer, at which the content presentation system can be implemented, and wherein mainly the elements essential for operation of the system of the invention are shown.

A data receiving/transmitting block 320 is configured to communicate, via at least one transmission channel 302, with the Ethernet (IP) network 210 or the wireless network, in order to receive content, applications and/or content recommendation data, as well as to transmit user or device statistic data. The device may further comprise external interfaces 330 to communicate, via at least one communication channel 303, with other devices or accessories.

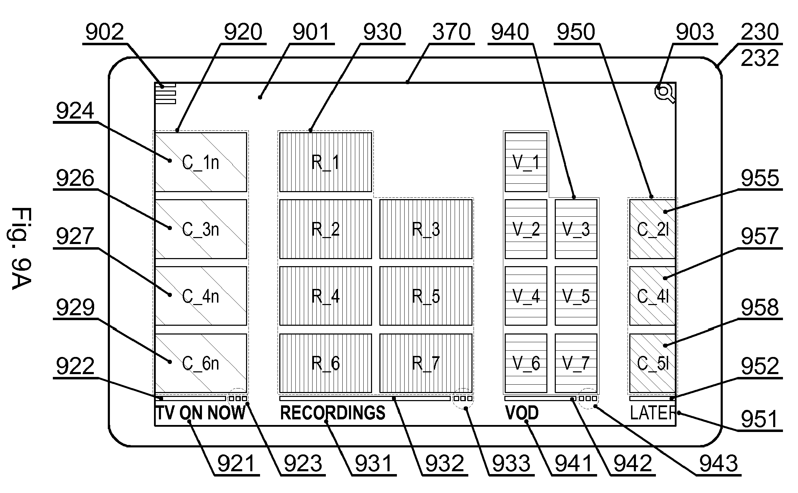

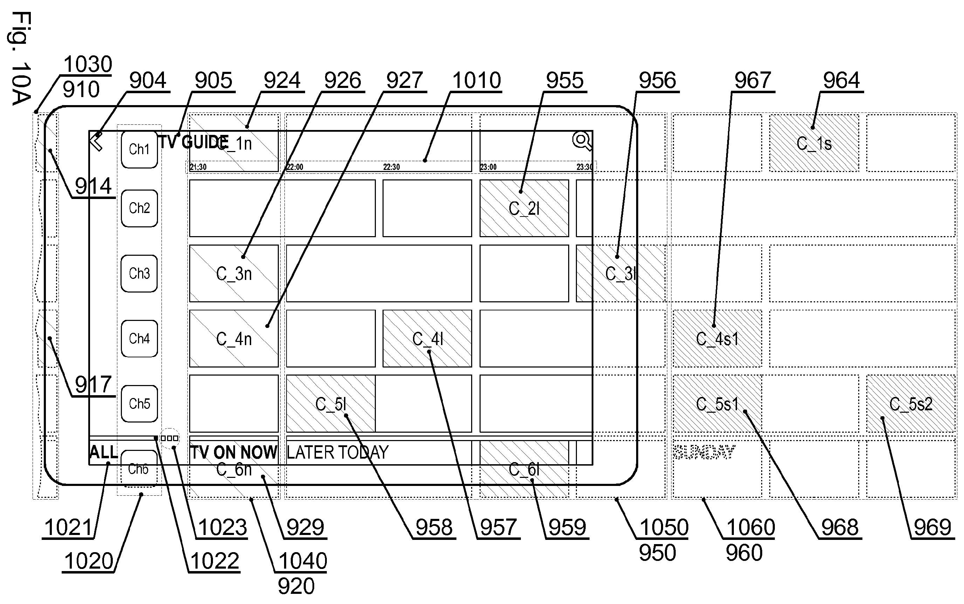

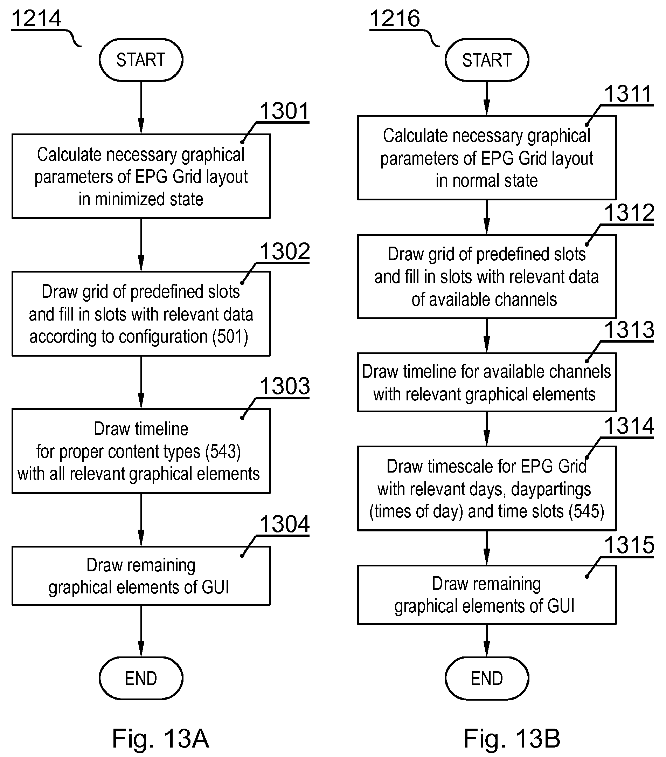

A controller 310 comprises a plurality of units configured to provide the functionality of the system as described herein. A recommendation manager 311 is configured to communicate with the EPG data provider 170 to receive content description data, to communicate with the recommendation server 130 to receive recommendation scores and to select the content items that meet predefine recommendation criteria to be presented as recommended content items. An EPG presentation unit 312 is configured to generate a minimized grid with the recommended content items as shown in Figs. 9A-9C in accordance with the method of Fig. 13A or a full grid as shown in Fig. 10A-10B in accordance with the method of Fig. 13B. An activity analysis unit 313 is configured to send information about the activity of the device or user, according to the method of 14, to the monitoring server 140. The units may be implemented as stand-alone or embedded hardware units or as software applications, such as applications downloadable from the application server 180. The controller 310 operates utilizing memory blocks 340, including RAM 342 and Flash 341 blocks.

A clock module 360 is configured to provide timing data necessary to report, to the monitoring server 140, the user or device activity for a particular time of day or periodically (e.g. every few hours, minutes or even seconds) and to present content available at a current time.

A media player 350 is an example of a content presentation block that is configured to decode the received content and convert it to audio/video format suitable for presentation to the user.

The mobile device 230 typically includes its own display 370 for presenting content, typically a touch-type display which thereby also functions as an input controller.

All modules of the device communicate with each other via one or more internal data buses 301.

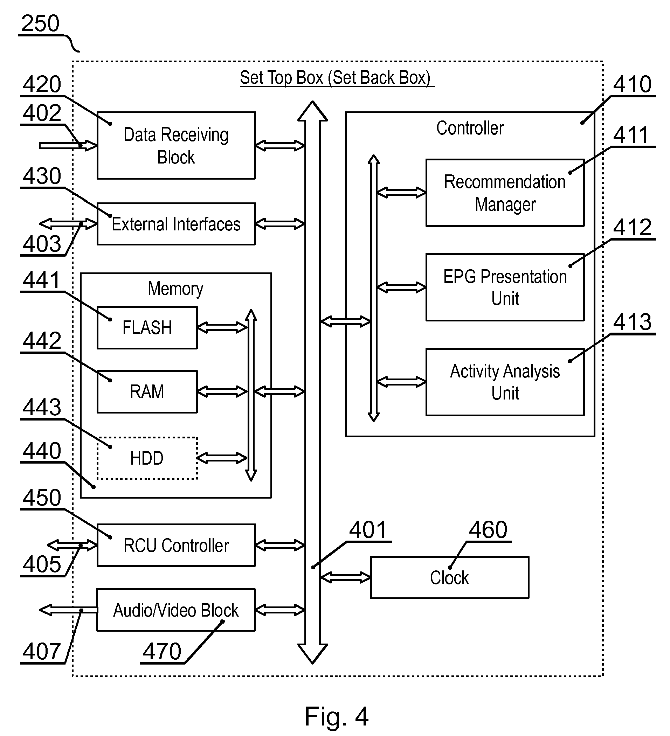

Fig. 4 presents a block diagram of a stationary device, such as a set top box or a set back box 250, at which the content presentation system can be implemented, and wherein mainly the elements essential for operation of the system of the invention are shown.

The elements 401, 410, 440, 460 are equivalent to the elements 301, 310, 340, 360 described with reference to the mobile device 230 of Fig. 3.

In addition, the memory block 440 may further comprise a hard disk drive (HDD) 443 or another type of mass storage that can be used to store video or other data locally at the device, but is not essential for its operation.

A data receiving block 420 is configured to receive downstream data, such as video content, from the broadcasting distribution interface 270 via a channel 402 (101). The data receiving block 420 (also called a front-end block) may comprise a plurality of tuners (such as satellite, cable, terrestrial or IPTV tuners), wherein one of the tuners receives content to be displayed at the television screen to which the device is directly connected (e.g. the STB 251 connected to the TV set 252) and another tuner receives content to be recorded at the HDD 443.

External interfaces 430, such as the Ethernet interface, are configured to communicate, via at least one transmission channel 403, with the Ethernet (IP) network 210 or the wireless network, in order to receive applications and/or content recommendation data, as well as to transmit user or device statistic data.

The device is operable by the user via a remote control unit (RCU) that communicates, typically via a wireless transmission channel 405, with a RCU controller block 450.

An audio/video block 470 is an example of a content presentation block and configured to decode the received content, convert it to an audio/video format suitable for presentation to the user, and transmit the converted content via a transmission channel 407 to a TV set to which the device is directly connected.

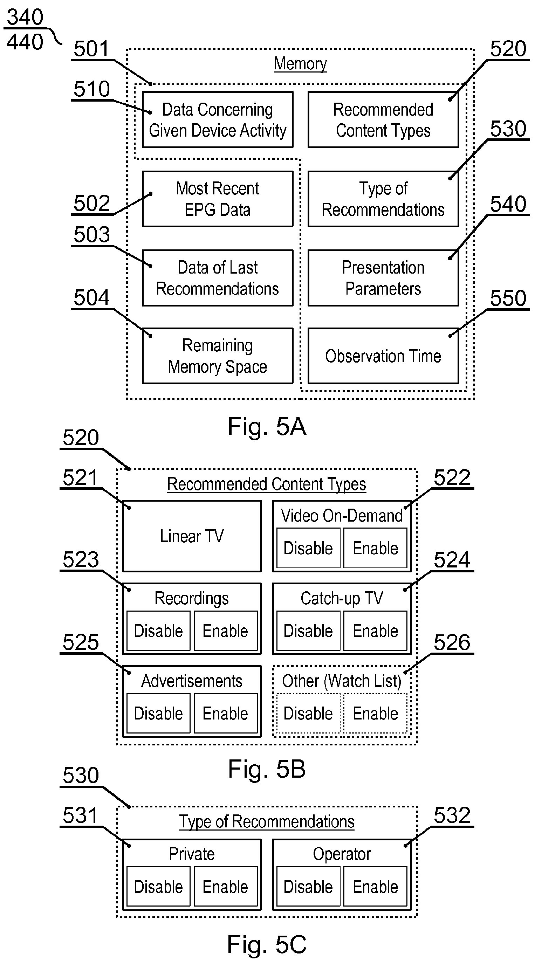

Fig. 5A presents data stored in user device memory 340, 440. Data is stored in containers, such as tables or other data types.

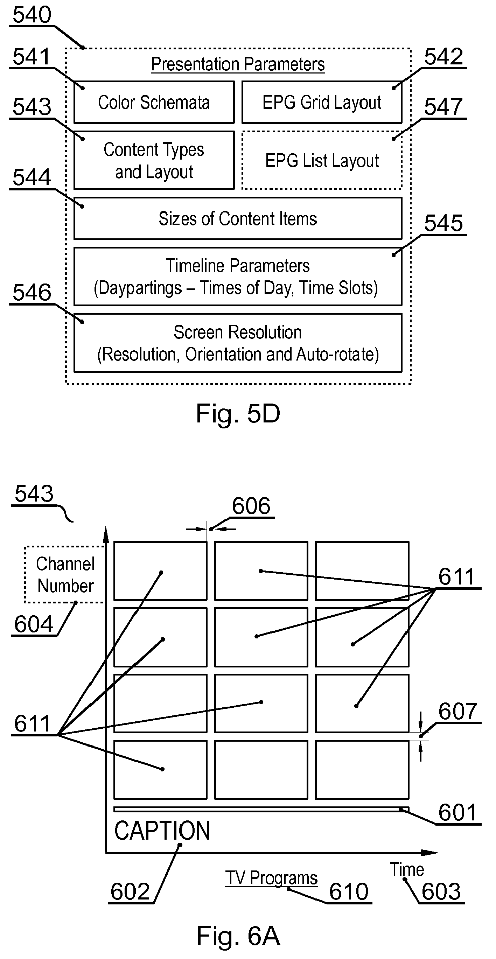

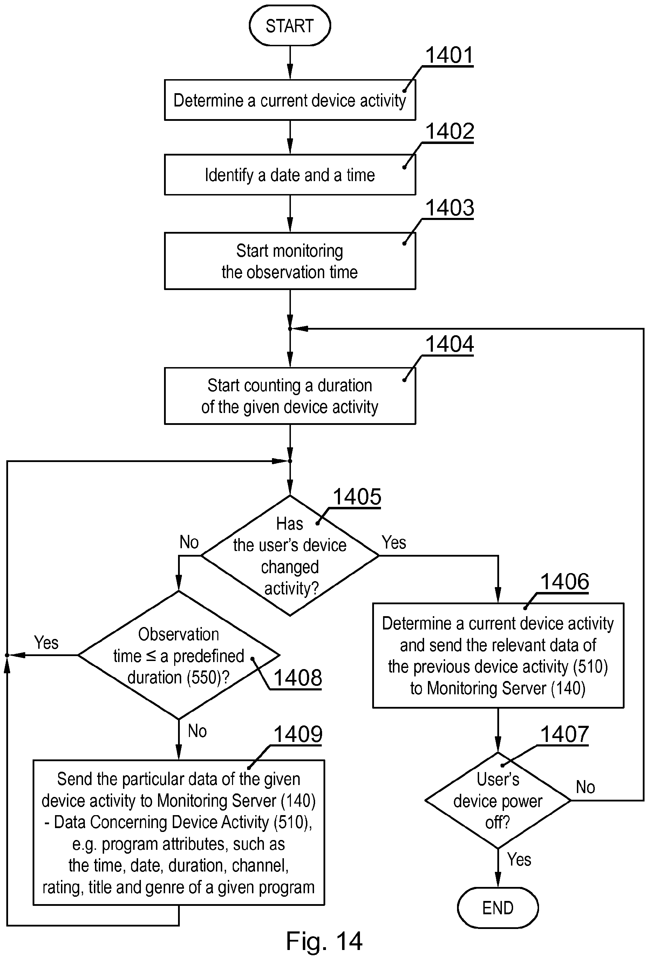

A data set 501 comprises a particular configuration, specifying a plurality of parameter types defined in data containers 510-550. That configuration can be changed by the user of the device or remotely by a system operator. The data container 510 stores data concerning given device activity, for example the program attributes of programs watched by the user, such as time, date, duration, channel, rating, title and/or genre of the watched program. The data container 520 stores recommended content types, for example such as explained in details with reference to Fig. 5B. The data container 530 stores types of recommendations, for example such as explained in details with reference to Fig. 5C. The data container 540 stores presentation parameters, for example such as explained in details with reference to Fig. 5D. The data container 550 stores observation time, specifying the length of the periods for which user activity is reported to the monitoring server 140 in the procedure explained with reference to Fig. 14.

The data container 502 stores a copy of most recent EPG data that were received from the EPG data provider 170. The data container 503 stores a copy of most recent EPG recommendations received from the recommendation server 130. Data from containers 502, 503 can be used in case there are no other more accurate or recent data available.

The remaining memory space 504 can be used for other purposes of the system.

Fig. 5B presents examples of recommended content types 520 that can be defined and used in the system. The recommended content types can be defined individually for various content sources, such as linear TV 521, Video on Demand 522, Recordings 523, Catch-up TV 524, Advertisements 525 and other types, such as a Watch List 526. At least some content sources can be enabled or disabled with respect to the recommendation system.

Fig. 5C presents examples of recommendation types 530, which can be defined either privately by the user 531 or by the system operator 532. For example, the recommendations defined by the operator can be tailored for a group of users, depending on user specifics, for example depending on user location (e.g. to recommend particular type of programming or advertisement to users in a particular city).

Fig. 5D presents examples of presentation parameters for displaying the minimized grid. They may include color schemata 541 (for example, a particular color may be defined for the particular user), EPG grid layout 542 (for example, a particular layout may be defined for the display used by the device), content types and layout (for example, different layouts may be defined depending on the content type presented), EPG list layout 547 (in case a list is used apart from the grid layout), sizes of content items 544 (which can be user-dependent), timeline parameters 545 (such as division of the timeline to daypartings (times of day) or particular time slots) and/or screen resolution 546 (depending on the display used by the device, defining the screen resolution, orientation and/or auto-rotation capabilities, in particular for mobile devices).

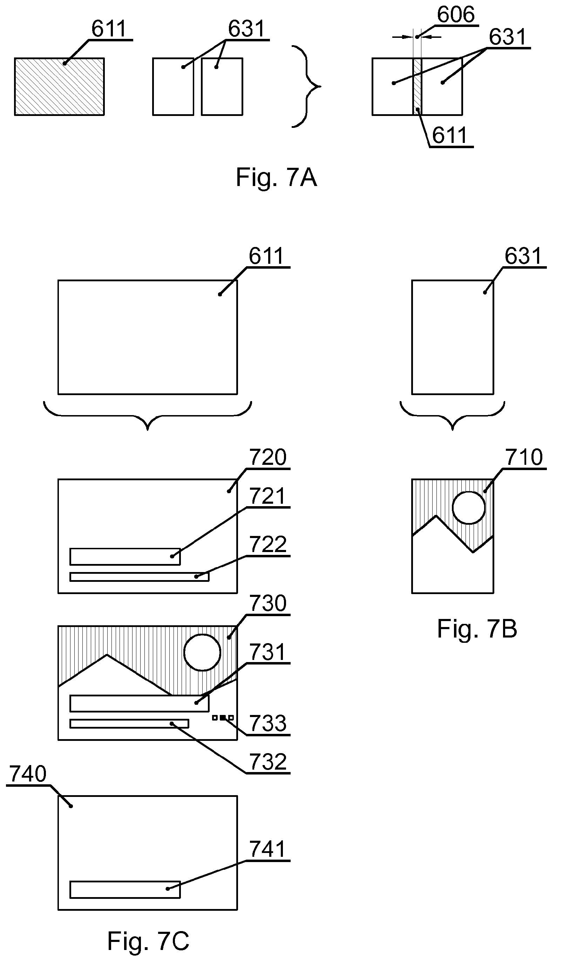

Fig. 6A presents an example of content display for a group of linear TV programs 610 to be displayed as a minimized group in a minimized grid, defined by content layout 543 for that type of content: linear TV. The group in the minimized grid comprises a plurality of cells 611 arranged in form of a two-dimensional matrix, wherein a first axis 603 (herein: the x axis) relates to time and the second axis (herein: the y axis) relates to channels of the linear TV (for example, cable television broadcast channels received by the device). The individual rows of the grid comprise cells 611 with content recommended for the particular channel number corresponding to that row. However, in contrast to typical EPG (wherein the cells have a width dependent on the program duration and relate to consecutive programs, i.e. content items), the cells may have a fixed width and a fixed distance between the cells. Each cell represents a single content item. Preferably, only recommended content items are presented. Therefore, it is possible that the first cell of the first column represents a currently broadcast program on that channel that is recommended, and the second cell represents a next program that is recommended, which is not necessarily the following program to be broadcast on that channel, but may be separated from the first recommended program by at least one program that is out of interest. The channels that are presented in consecutive rows are preferably only channels which comprise recommended content within the time period of interest. The caption item 602 presents description of the time scope of recommended content represented by the cells above, such as TV ON NOW, LATER TODAY, name of the day of the week, time of day. The elements 606, 607 represent predefined distances between the cells, which allow limited visibility of the background. Each cell 611 may be configured to display information about the particular content item in a way as explained in details with reference to Figs. 7A-7C. Therefore, a typical EPG grid is minimized to the minimized form by deleting the content items that are out of interest and presenting only the items of interest, in the order of their broadcast time.

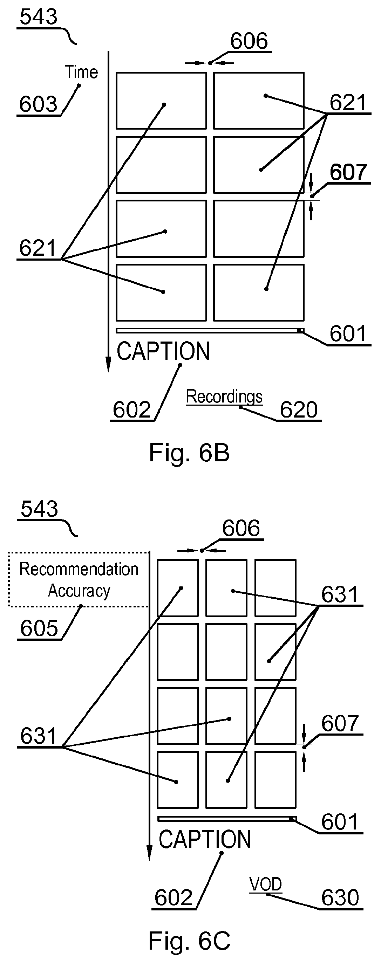

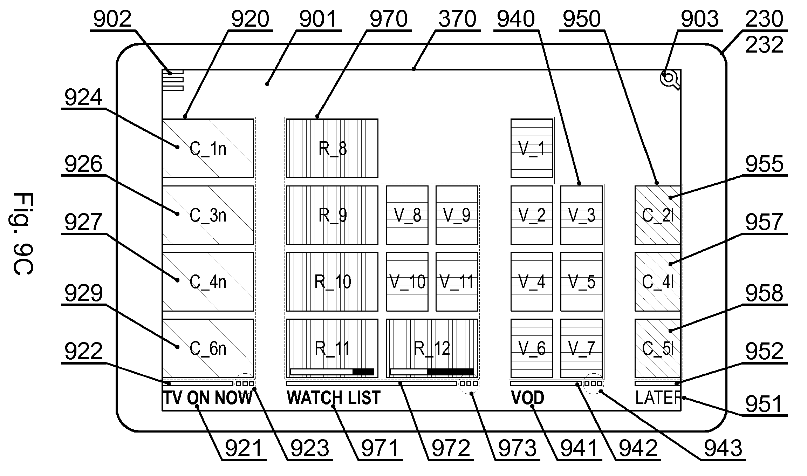

Fig. 6B presents an example of content display for a group of recordings 620 (such as recordings stored in local memory of the device, such as a HDD 443) to be displayed as a minimized group in a minimized grid, defined by content layout 543 for that type of content: recordings. The individual cells 621 represent individual recordings, in a manner similar as explained above for element 611. In addition, a progress bar can be shown for recordings, indicating the point at which the recent watching of that recording has been stopped and therefore it can be resumed from that time (as shown in Fig. 9C for elements R11 and R12). The recordings may be arranged according to some sorting criteria, for example starting from the oldest recording or from the most recommended recording. In another configuration, individual rows of the vertical axis may relate each to recordings made in a particular week, and the cells in that row may represent consecutive recordings stored in that week.

Fig. 6C presents an example of content display for a group of video on demand content 630 (for example available form the VOD service 160) to be displayed as a minimized group in a minimized grid, defined by content layout 543 for that type of content: VOD. In that arrangement, content items are arranged according to the recommendation accuracy (or in other words, recommendation score), such that the items are arranged starting from the mostly recommended content item in the top left cell 631, followed by lower-scored items in the same row, followed by further lower-scored items in successive rows.

The group displayed in the minimized grid may be scrollable along one of its axes. For example, the group of Fig. 6A may be scrollable along the vertical axis to view further channels and along the horizontal axis to view recommended items that will be broadcast at a later time. The group of Fig. 6C may be scrollable only along the vertical axis, with a fixed number of items to be shown in each row along the horizontal axis.

Yet other arrangements are possible, depending on the content type. For example, individual rows of the vertical axis may represent different content genres, such as action movies, comedy moves, documentaries, and the items of interest may be arranged along the horizontal axis in each row depending on the time they have been recorded or are going to be broadcast. Moreover, the recordings may be arranged in the horizontal row depending on their recommendation score, starting with the most recommended recording as the first in the row.

Therefore, the sorting criteria of content items represented by the cells within the minimized grid may be at least one criteria selected from the group comprising: recording time, recording length, already viewed time, source, recommendation score, genre, title, etc.

Moreover, at least one of the cells within the group of cells may be configured to display an advertising content, for which data is obtained from the same source as the data for the content items of that group or from another source. The cell that displays the advertisement may have the same size as the other cells in the group or a different size (for example, a size being a multiple of the size of the other cells).

Figs. 7A-7C present examples of content information elements displayed in individual cells 611, 621, 631 of the minimized grid.

In order to keep consistency between groups of different types of recordings, the elements 631 may be sized such that two such elements 631 plus the spacing 606 between them occupy the same space as a single element 611, as shown in Fig. 7A.

Fig. 7B shows an example of data that can be presented in a single small cell 631 - it can be a poster image 710 representative for that content.

Fig. 7C shows examples 720-740 of data that can be presented in a single larger cell 611. In the first example 720, a program title 721 can be presented along with a descriptor 722. In the second example 730, a background layer may represent an image representative for that content (e.g. a screenshot), over which a program title 731 can be presented along with a descriptor 732 and an icon 733 enabling access to extended information. In the third example 740, only the program title 741 is presented.

The minimized grid may be generated on a graphical layer having actual size larger than the size of the screen of the device, such that only a fragment of the grid is visible on the device screen, which allows quick scrolling through the grid for devices with limited computational resources, in particular mobile phones or set top boxes.

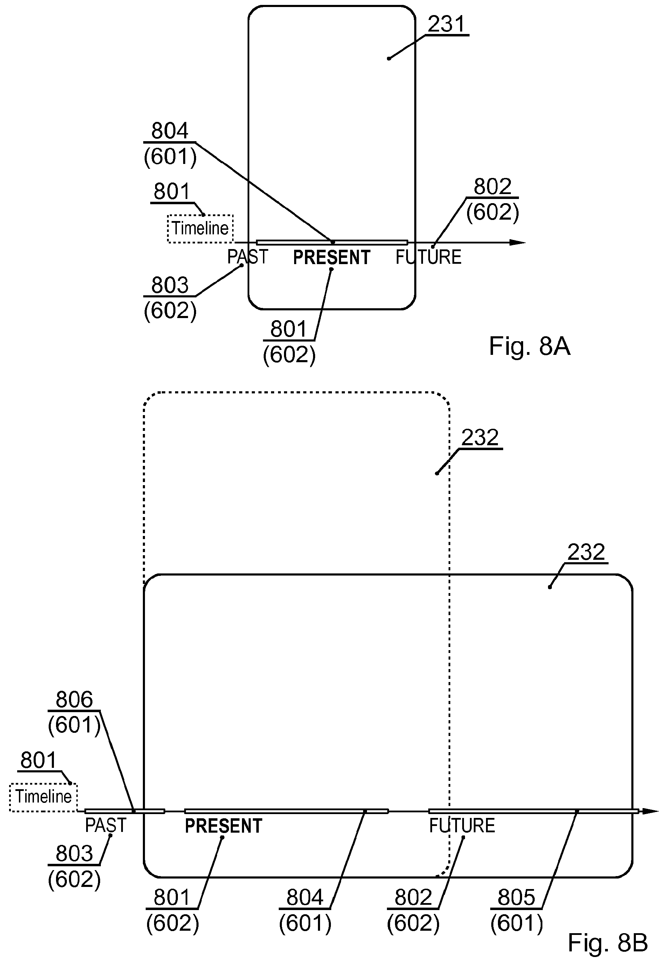

Fig. 8A presents an example of a range of the complete grid that can be fit to a screen of a small smartphone, while Fig. 8B presents examples of a range of the complete grid that can be fit to a screen of a larger tablet in either horizontal or vertical position.

Fig. 9A presents one embodiment of a minimized grid presentation scheme. That embodiment comprises a plurality of groups of content items of different categories: a live broadcast 921 group 920 (comprising recommended programs 924-929 which are currently broadcast), a recordings 931 group 930 (comprising recommended recordings stored on a HDD 443), a Video on Demand 941 group 940 (comprising recommended VoD content items from VOD service 160) and forthcoming television programming 951 group 950 (comprising recommended programs that will be broadcast in future). Each group may have its own scroll bar 922, 932, 942, 952 (with further content availability indicator 923, 933, 943) which the user may scroll to see more items of that group. The items may be arranged on a separate graphics layer 901. Additional options may be available via the menu 902 and search may be available via the search icon 903.

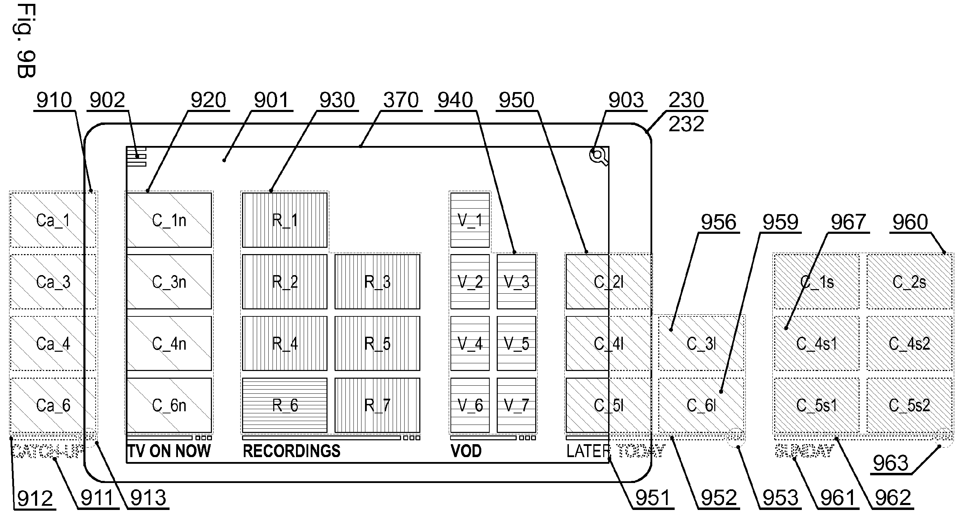

The items presented in Fig. 9A may be part of a larger minimized grid, shown in full in Fig. 9B, which further comprises elements that did not fit to the screen size of the device, such as catch-up 911 group 910 (comprising recommended recordings from a catch-up service 150), other items 956, 959 of the forthcoming television programming group 950 with today's programming, and another television programming group 960 with content items 967 for a forthcoming day 961.

Moreover, the minimized grid may comprise, as shown in Fig. 9C, a group 970 of most recommended content items 971 that are of different types, for example the most recommended recordings and VoD items.

Moreover, apart from displaying the groups of cells, the minimized grid may further display advertising content between the groups of cells.

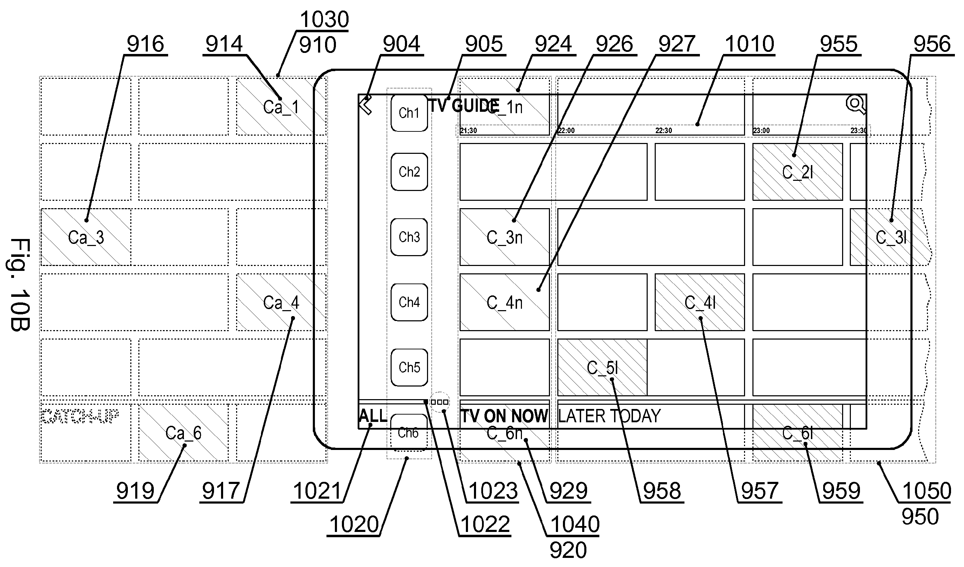

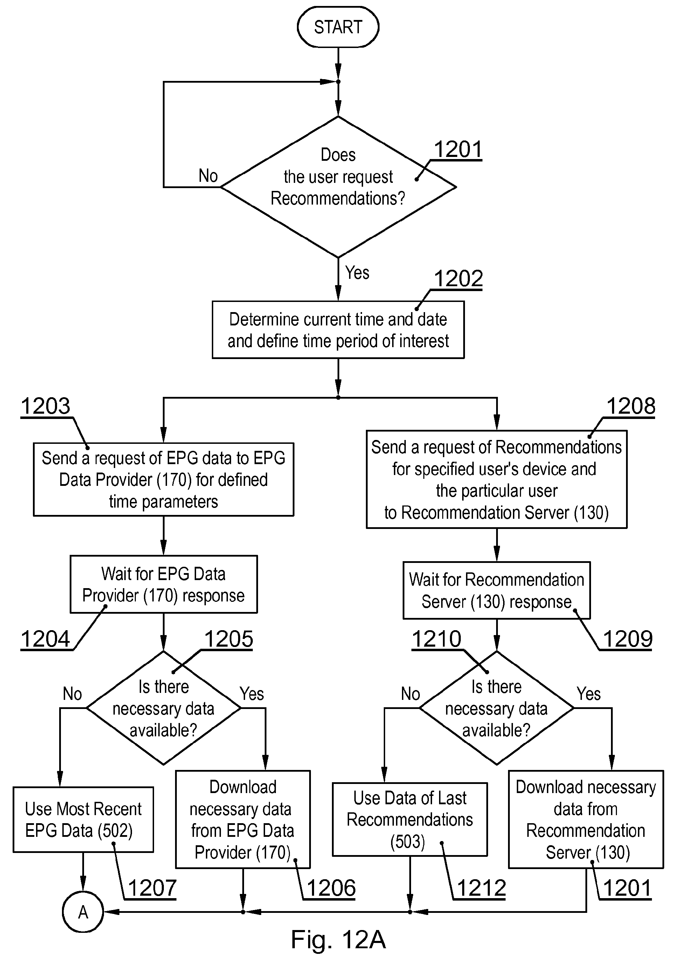

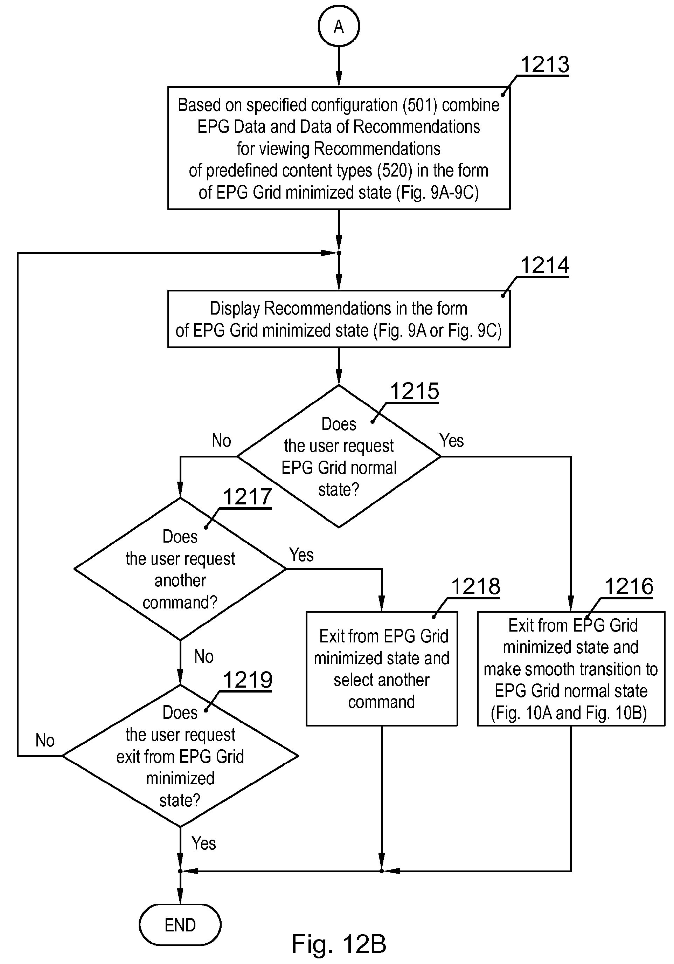

Figs. 10A-10B present a graphical user interface for a full typical grid. This full grid is a typical EPG grid and can be displayed when the user requests transition from the minimized grid of Fig. 9A to full grid, for example in step 1216 of Fig. 12. The full grid comprises all broadcast programming arranged in consecutive order, comprising both the recommended items (such as 924, 926, 927, 929, 958, 957, 955, 959, 956, 967, 968, 964, 969) that were displayed in the minimized grid, as well as non-recommended items that were not displayed in the minimized grid. The full grid may also group the programs into currently received content 1040, as well as past content 1030 and future content 1050. The full grid may comprise typical elements such as a channel list 1020 and various scroll bars 1022, 1023. Fig. 10B shows a fragment of the same grid as Fig. 10A, but with more past recordings 1030 which are available from a catch-up service.

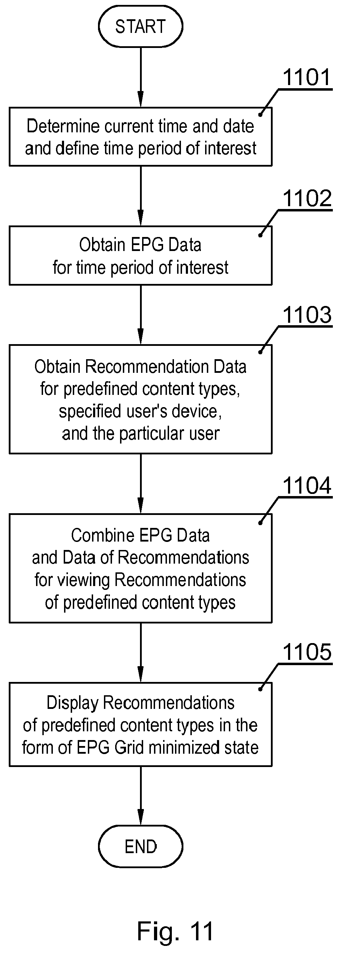

Fig. 11 presents in general a method for presenting recommendations to the user. The procedure starts in step 1101 by determining the current time and date (from the clock module of the device) and defining the time period of interest - typically this would be the current time, but the user may also indicate interest in content that is going to be available at some particular time in the future. Next, in step 1102 the content description data (i.e. data to be displayed within the EPG) for the content of items within the time period of interest is obtained from the EPG data provider 170. Then, recommendation data is obtained from the recommendation server 130, for predefined content types, specified user device and/or the particular user. Next, in step 1104 the EPG data and recommendation data are combined to select content items that meet predefined recommendation criteria, to be presented as recommended content items. The steps 1103 and 1102 may be also performed in alternate order, such as to obtain EPG data only for the recommended content. Finally, the recommendations of predefined content are presented in the form of a minimized grid in step 1105, as shown for example in Figs. 9A-9C.

Figs. 12A-12B present in details a method for presenting recommendations to the user. The procedure starts upon detecting in step 1201 that the user requests recommendations, for example by selecting a special option in the EPG application. Next, the current time and date and the time period of interest are determined, as in step 1101 of the general method. The following sets of steps 1203-1207 and 1208-1212 can be performed in parallel or consecutively one after another, in any order.

In step 1203 a request for EPG data is sent to the EPG data provider 170 to obtain EPG data for the defined time period of interest. After the EPG provider provides a response in step 1204, it is checked in step 1205 whether the desired data are available. If so, the EPG data are downloaded in step 1206 from the EPG data provider 170. If not, the most recent EPG data that are already stored in memory 502 are read in step 1207.

In step 1208 a request for recommendations for the particular user device and/or the particular user is sent to the recommendation server 130. After the recommendation server provides a response in step 1209, it is checked in step 1210 whether the desired data are available. If so, the data are downloaded in step 1201 from the recommendation server 130. If not, the data of the last recommendations that are stored in memory 503 are read in step 1212.

Next, in step 1213 the EPG data and recommendation data are combined, based on the specified configuration stored in memory 501, to view recommendation of content types predefined in memory 520 in a minimized grid, for example such as shown in Figs. 9A-9C. The minimized grid is then displayed in step 1214 to the user. The user may then navigate the minimized grid in step 1219, or transform the minimized grid to a normal grid (as shown in Figs. 10A, 10B) in step 1216 or exit the EPG application in step 1218.

Fig. 13A presents a method for generating a minimized grid layout, such as shown in Figs. 9A-9C. First, the necessary graphical parameters of the minimized EPG grid layout are calculated in step 1301, such as the screen size, number of items to be displayed etc. Next, the grid of predefined slots is drawn on the display in step 1302 and filled with relevant data, according to the configuration stored in memory 501. Next, a timeline for proper content types, as defined in memory 543, is drawn in step 1303 with all relevant graphical elements. Then the remaining graphical elements of the user interface are drawn in step 1304.

Fig. 13B presents, for the purpose of comparison with Fig. 13A, a method for generating a normal grid layout, such as shown in Figs. 10A-10B. First, the necessary graphical parameters of the normal EPG grid layout are calculated in step 1311, such as the screen size, number of items to be displayed etc. Next, the grid of predefined slots is drawn on the display in step 1312 and filled with relevant data, according to the configuration stored in memory 501. Next, a timeline for available channels is drawn in step 1313 with all relevant graphical elements. Next, a timescale is drawn in step 1314 with relevant days, daypartings (timed of day) and time slots, according to the configuration stored in memory 545. Then the remaining graphical elements of the user interface are drawn in step 1315.

Fig. 14 presents a method for monitoring user activity. In step 1401 a current device activity is determined, e.g. device power mode, a channel to which the device is tuned, an active user, etc. A current date and time are identified from the clock module in step 1402. The observation is started in step 1403 and the duration of the particular device activity is monitored in step 1404. If it is detected in step 1405 that the device has changed its activity from the one determined in step 1401 to another one, the new activity is determined in step 1406 and the previous activity data is sent from memory 510 to the monitoring server 140. In case the device is not powered off in step 1407, the procedure returns to monitoring the current device activity. In case it is determined in step 1408 that the current activity is performed for a duration longer than a predetermined duration as defined in memory 550, the particular data of the given activity is sent from memory 510 to the monitoring server 140. The device activity data may include attributes of currently watched content, such as time, date, duration, channel, rating, title and/or genre of a given program.

The procedure of Fig. 14 can be operated continuously, periodically or upon detection of a change of device state (invoked either by the device itself or by the user issuing a command to the device).

It can be easily recognized, by one skilled in the art, that the aforementioned method for presentation of content may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for presenting content items to a user of a device having a network interface and a controller configured to generate a graphical user interface, the method comprising performing the following steps within the device:
- receiving (1102), from a data provider (170) accessible over the network (190), content description data for a plurality of content items;
- receiving (1103), from a recommendation server (130) accessible over the network (190), recommendation data for the plurality of content items;
- selecting (1104) the content items that meet predefined recommendation criteria to be presented as recommended content items; and
- presenting (1105) the recommended content items in the form of an electronic program guide (EPG) grid within the graphical user interface to allow the user to navigate and select the content item of interest;
**characterized in that**
- the EPG grid has a form of a minimized grid that comprises at least one minimized group (910-970) of cells (611, 621, 631), wherein the cells in the minimized group (910-970) are arranged as a matrix having at least one column and a plurality of rows, wherein each cell (611, 621, 631) is assigned to a particular content item depending on the recommendation score for that content item and has a size that is independent of the length of the content item.

2. The method according to claim 1, wherein the cells (611, 621, 631) of at least one of the groups (910-960) are assigned to content items of a different category than the category of the content items to which there are assigned the cells (611, 621, 631) of at least one of the other groups (910-960).

3. The method according to claim 1, wherein the cells (611, 621, 631) of at least one of the groups (970) are assigned to content items of different categories.

4. The method according to any of claims 2-3, wherein the category of a content item is one of: a catch-up (910), a live broadcast (920), a recording (930), a Video on Demand (940), a forthcoming television programming (950, 960).

5. The method according to any of previous claims, wherein the size of all cells (611, 621, 631) within the group (910-970) is the same.

6. The method according to any of previous claims, wherein the size of the cells (611, 621, 631) of at least one of the groups (910-960) is different than the size of the cells (611, 621, 631) of at least one of the other groups (910-960).

7. The method according to any of previous claims, wherein the cells (611, 621, 631) of at least one of the groups (910, 920, 950, 960) are assigned to television programming available from a plurality of television channels, and wherein each row comprises recommended content items available from a particular television channel sorted according to the broadcast time.

8. The method according to any of previous claims, wherein the cells (611, 621, 631) of at least one of the groups (910, 920, 950, 960) are assigned to content items sorted according to at least one criteria selected from the group comprising: recording time, recording length, already viewed time, source, recommendation score, genre, title.

9. The method according to any of previous claims, wherein the cells (611, 621, 631) of at least one of the groups (910-970) comprise at least one content description data selected from the group comprising: a background image, a background video, content title, content description.

10. The method according to any of previous claims, wherein at least one of the groups (910-970) comprises a cell assigned to an advertising content.

11. The method according to any of previous claims, wherein at least one of the groups (910-970) is scrollable along a horizontal and/or vertical axis.

12. The method according to any of previous claims, wherein the minimized grid has a size larger than the size of the display screen connected to the device and is scrollable along a horizontal and/or vertical axis.

13. The method according to any of previous claims, further comprising monitoring (1401) an activity of the device and sending data descriptive of the activity to a monitoring server (140).

14. A non-transitory computer readable storage medium comprising instructions that, when executed by a computer, enable a graphical user interface to be displayed, wherein the graphical user interface is configured to display information related to recommended content items in the form of an electronic program guide (EPG) grid to allow the user to navigate and select the content item of interest, **characterized in that**:
- the recommended content items are selected from a plurality of content items having associated recommendation data that meet predefined recommendation criteria; and
- the EPG grid has a form of a minimized grid that comprises at least one minimized group (910-970) of cells (611, 621, 631), wherein the cells in the minimized group (910-970) are arranged as a matrix having at least one column and a plurality of rows, wherein each cell (611, 621, 631) is assigned to a particular content item depending on the recommendation score for that content item and has a size that is independent of the length of the content item.

15. A device (230, 250) comprising:
- a network interface (320, 420) configured to allow communication with external services over a network (190);
- a controller (310, 410) configured to generate a graphical user interface;
- a recommendation manager (311, 411) configured to:
- receive, from a data provider (170) accessible over the network (190), content description data for a plurality of content items;
- receive, from a recommendation server (130) accessible over the network (190), recommendation data for the plurality of content items; and
- select the content items that meet predefined recommendation criteria to be presented as recommended content items; and
- an EPG presentation unit (312, 412) configured to present the recommended content items in the form of an electronic program guide (EPG) grid within the graphical user interface to allow the user to navigate and select the content item of interest;
**characterized in that**
- the EPG grid has a form of a minimized grid that comprises at least one minimized group (910-970) of cells (611, 621, 631), wherein the cells in the minimized group (910-970) are arranged as a matrix having at least one column and a plurality of rows, wherein each cell (611, 621, 631) is assigned to a particular content item depending on the recommendation score for that content item and has a size that is independent of the length of the content item.
